# EUROPEAN PATENT APPLICATION

(11) **EP 3 929 641 A1**
(43) Date of publication of application: **29.12.2021**
(21) Application number: 20181927.3
(22) Date of filing: 24.06.2020
(51) Int. Cl.: G02B 6/122, G02B 6/30, G02B 6/38, G02B 6/42, G02B 6/13

(54) **A SEMICONDUCTOR PACKAGE COMPRISING ONE OR MORE OPTICAL INTEGRATED CIRCUITS**

(71) Applicant: IMEC VZW, 3001 Leuven (BE); Universiteit Gent, 9000 Gent (BE)
(72) Inventor: Van Steenberge, Geert, 3001 Leuven (BE); Beyne, Eric, 3001 Leuven (BE); Roelkens, Günther, 3001 Leuven (BE); Van Campenhout, Joris, 3001 Leuven (BE); Missinne, Jeroen, 3001 Leuven (BE)
(74) Representative: Patent Department IMEC

(57) **Abstract**

According to the invention, one or more photonic integrated circuit chips or PICs (1) are packaged, preferably together with electronic ICs (2) and/or other PICs (1'), in a mould substrate produced on wafer scale by the technology known as fan-out wafer level packaging. Integrated in the package is at least one optical redistribution layer (10) comprising one or more polymer waveguides (21) coupled respectively to semiconductor waveguides (23) on at least one of the PICs. The package furthermore comprises one or more adapter dies (11) comprising one or more attachment and/or alignment features (22) configured to associate with corresponding features on a connector comprising one or more optical fibres, so that when the connector is attached to the package, the one or more fibres are facing one or more polymer waveguides (21) at an end face of the optical redistribution layer (10). The methods for producing the package of the invention combine overmoulding techniques with direct write lithography for the accurate processing of the polymer waveguides (21), relative to the semiconductor waveguides (23) on the PICs (1).

## Description

### Field of the Invention

The present invention is related to the packaging of micro-electronic components, including photonic integrated circuit chips (PICs), and to the coupling of the packaged PIC to standard optical fibres.

### State of the art.

Efficient coupling of silicon waveguides in silicon-based photonic ICs to standard optical fibres, such as the SMF-28 (Single Mode Fibre) fibres has been an issue of growing importance.
Coupling to tapered lensed fibres has been achieved with single and multiple tip tapers in the crystalline silicon (c-Si) layer of the silicon on-insulator (SOI) wafers used for silicon photonics. However, the requirement for tapered lensed fibres due to the small spot sizes achieved with these tapers increases the cost, and moreover the tight alignment tolerance is a limiting factor for high-volume manufacturing. The smaller the spot size, the more important the alignment accuracy between the PIC and the (lensed) fibre, which makes the assembly time-consuming, and as a result more expensive.

Many approaches have been investigated for increasing the spot size on the photonics chip, limiting the required alignment accuracy during fibre assembly.

However, all of the solutions referred to above rely on individually packaged components, based on die-level active alignment of single fibres or fibre arrays. In other words, packaging the PICs requires complex and potentially expensive coupling solutions for each PIC individually. This results in an unacceptable cost for high-volume applications, even for the larger mode field diameters.

A further challenge resides in the difference in dimensions and pitch between an array of silicon waveguides on the PIC and an array of optical fibres to which the waveguides are to be connected. Typical Si waveguide pitch is in the order of 1 µm while the pitch of an array of fibres may be up to 250 µm.

### Summary of the invention

The invention aims to provide a solution to the above-described problems. This aim is achieved by the semiconductor chip package and by the methods disclosed in the appended claims. According to the invention, one or more PICs are packaged, preferably together with electronic ICs, in a moulded substrate produced on wafer scale by the technology known as fan-out wafer level packaging. Integrated in the package is at least one optical redistribution layer comprising one or more polymer waveguides coupled respectively to semiconductor waveguides on at least one of the PICs. The package furthermore comprises one or more adapter dies comprising one or more attachment and/or alignment features configured to associate with corresponding features on a connector comprising one or more optical fibres, so that when the connector is attached to the package, the one or more fibres are facing one or more polymer waveguides at an end face of the optical redistribution layer. The methods for producing the package of the invention combine overmoulding techniques with adaptive lithographic patterning, such as direct write lithography (DWL), for the accurate processing of the polymer waveguides, relative to the semiconductor waveguides on the PICs.

Attachment and/or alignment features for the connectors are present on the adapter dies which are integrated on wafer level. The packages and methods of the invention are therefore suitable for high-volume manufacturing. When one or more arrays of semiconductor waveguides is to be coupled to corresponding arrays of fibres in the connector, the difference in pitch can be easily incorporated in the optical redistribution layer, by processing one or more fan-out patterns of the polymer waveguides.

The invention is in particular related to a semiconductor chip package, comprising the following components embedded in an encapsulation material:
- At least one photonic integrated circuit chip, comprising a plurality of semiconductor waveguides,
- An optical redistribution layer comprising a plurality of polymer waveguides which are optically coupled to the semiconductor waveguides, wherein the polymer waveguides are part of a polymer core layer the polymer waveguides extending between the semiconductor waveguides and an end face of the core layer,
- An adapter die comprising one or more attachment and/or alignment features configured to interact with corresponding features on a connector comprising one or more optical fibres, said interaction being required for attaching the connector to the package, so that when the connector is attached to the package, the one or more fibres are facing one or more polymer waveguides at the end face of the core layer.
According to an embodiment, the core layer is sandwiched between a first and second polymer cladding layer.

According to an embodiment, the polymer waveguides are coupled to the semiconductor waveguides by adiabatic coupling.

According to an embodiment, the polymer waveguides are coupled to the semiconductor waveguides by butt coupling.

According to an embodiment, the adapter die comprises openings configured to receive pins or equivalent connection means of the connector.

According to an embodiment, the package further comprises at least one electronic integrated circuit chip embedded in the encapsulation material.

The package according to the invention may comprise multiple PICs and the ORDL may comprise a portion that interconnects two or more PICs.

In a package according to the invention comprising multiple PICs, the ORDL and the adapter die may be configured to connect one or more connectors to at least two PICs simultaneously.

According to an embodiment, at least some of the polymer waveguides in the optical redistribution layer are shaped according to a 3-dimensional shape so as to allow the coupling of all the polymer waveguides to a connector comprising multiple fibres which are not arranged in a one-dimensional array.

The invention is also related to a kit of parts comprising at least one package according to any of the previously described embodiments, and at least one connector configured for attachment to the adapter die of said at least one package.

The invention is equally related to a first embodiment of a method for producing a package according to any one of the previously described embodiments, the method according to the first embodiment comprising the steps of:
- Producing by a first overmoulding and planarization step a planarized reconstructed wafer, the reconstructed wafer comprising, embedded in an encapsulation material, at least the following components :
   ∘ the photonic integrated circuit chip, an upper surface of the chip being coplanar with a planarized surface of the wafer, said upper surface comprising a plurality of semiconductor waveguides,
   ∘ the first polymer cladding layer directly adjacent the chip,
- Producing the polymer waveguides on top of and in physical contact with the first cladding layer, wherein the polymer waveguides are optically coupled to the semiconductor waveguides, and wherein the polymer waveguides are produced by adaptive lithographic patterning based on an image of the position of the semiconductor waveguides,
- Filling spaces between the polymer waveguides with polymer cladding material, thereby forming the polymer core layer,
- producing a second cladding layer on top of the polymer core layer, said second cladding layer being optional if the adapter die itself has the refractive properties of a cladding layer,
- Placing the adapter die on top of the second polymer cladding layer, or on the core layer if no second cladding layer is produced and if the adapter die itself has the refractive properties of a cladding layer,
- Optionally performing a second overmoulding and planarization step, thereby embedding the adapter die in the encapsulation material and forming a final reconstructed wafer,
- Separating the reconstructed wafer or the final reconstructed wafer into separate packages.

The invention is equally related to a second embodiment of a method for producing a package according to any one of the previously described embodiments, the method according to the second embodiment comprising the steps of :
- producing by a first overmoulding and planarization step a planarized reconstructed wafer, the reconstructed wafer comprising, embedded in an encapsulation material, at least the following components :
   ∘ the photonic integrated circuit chip, an upper surface of the chip being coplanar with a planarized surface of the wafer, said upper surface comprising a plurality of semiconductor waveguides,
   ∘ the first polymer cladding layer directly adjacent the chip,
   ∘ the adapter die directly adjacent to the first polymer cladding layer, an upper surface of the adapter die being coplanar with the planarized surface of the first reconstructed wafer,
- producing an additional cladding layer on the first cladding layer and on the adapter die, wherein the additional cladding layer is optional if the adapter die itself has the refractive properties of a cladding layer,
- Producing the polymer waveguides on top of and in physical contact with the additional cladding layer or with the first cladding layer and the adapter die, wherein the polymer waveguides are optically coupled to the semiconductor waveguides, and wherein the polymer waveguides are produced by adaptive lithographic patterning based on an image of the position of the semiconductor waveguides and on an image of one or more position markers present on the adapter die,
- Filling spaces between the polymer waveguides with polymer cladding material, thereby forming the polymer core layer and forming the second cladding layer on top of the polymer core layer,
- Optionally performing a second overmoulding and planarization step, thereby forming a final reconstructed wafer,
- Separating the reconstructed wafer or the final reconstructed wafer into separate packages.
In the first embodiment of the method of the invention, the first cladding layer may be coplanar with the upper surface of the chip, and the polymer waveguides may be produced on top of the semiconductor waveguides so as to be coupled thereto by adiabatic coupling.

Alternatively, in the first embodiment of the method of the invention, the first cladding layer may be recessed with respect to the upper surface of the chip, wherein the polymer waveguides are produced colinearly with respect to the semiconductor waveguides so as to be coupled thereto by butt coupling.

In the second embodiment of the method of the invention, the first cladding layer and the adapter die may be recessed with respect to the upper surface of the chip, wherein the polymer waveguides are produced colinearly with respect to the semiconductor waveguides so as to be coupled thereto by butt coupling.

In the first or the second embodiment of the method of the invention, the step of producing the reconstructed wafer may comprise :
- Producing the first polymer cladding layer on a first carrier substrate,
- Placing a photonic integrated circuit chip on the carrier substrate, adjacent the first polymer cladding layer, the chip comprising a plurality of semiconductor waveguides on the surface that is placed on the carrier substrate,
- Performing a first overmoulding and planarization step, thereby forming the reconstructed wafer, the chip being embedded in said reconstructed wafer,
- Flipping the reconstructed wafer and attaching it to a second carrier substrate, and removing the first carrier substrate, so that the first cladding layer is exposed.

### Brief description of the figures

Figures 1a and 1b illustrate a semiconductor chip package according to a first embodiment of the invention, comprising a photonic IC and an electronic IC. According to the first embodiment, the polymer waveguides are coupled to the Si-waveguides on the PIC by adiabatic coupling.
Figures 2a to 2k illustrate a method for producing the package of Figures 1a and 1b.
Figure 3 illustrates a version of the first embodiment, wherein the core layer of the optical distribution layer comprises 3D shaped polymer waveguides obtainable by two-photon lithography.
Figures 4a and 4b illustrate a semiconductor chip package according to a second embodiment of the invention. According to the second embodiment, the polymer waveguides are coupled to the Si-waveguides on the PIC by butt coupling.
Figures 5a to 5d illustrate key steps for producing the package according to Figures 4a and 4b.
Figures 6a to 6h illustrate method steps for producing a package according to a third embodiment of the invention. According to the third embodiment, the adapter die is positioned before producing the polymer waveguides of the optical redistribution layer.
Figure 7 illustrates a semiconductor chip package according to the invention, comprising two PICs which are interconnected by an optical redistribution layer.
Figure 8 illustrates a semiconductor chip package according to the invention, comprising two PICs coupled by a single optical redistribution layer to a single adapter die, for connection to a single optical connector.

### Detailed description of the invention

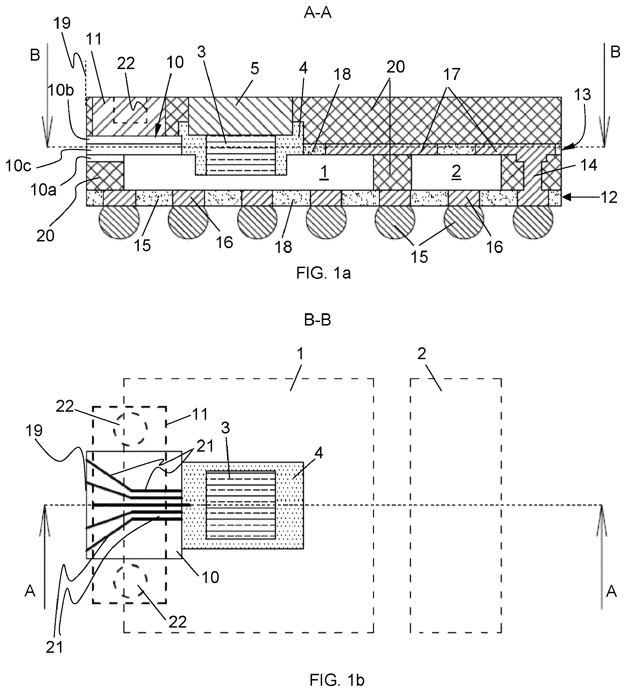

Figures 1a and 1b illustrate an example of a package according to an embodiment of the invention. The package comprises a PIC 1 and an electronic IC 2, hereafter abbreviated as 'EIC'. A laser diode chip 3 is assembled on the PIC 1. The laser diode chip 3 is encapsulated in an optical glob top epoxy 4 and provided with a heat sink 5 on its upper surface. The presence of the laser diode and heat sink is not essential to the invention and is merely intended to illustrate a realistic context to which the invention is applicable. The invention is equally applicable to PICs not provided with these elements. The optical redistribution layer (hereafter ORDL) 10 and the adapter die 11 have been visualized in the side section view of Figure 1a as well as in the top section view of Figure 1b and will be described in more detail hereafter. The package further comprises a first and second electrical redistribution layer (hereafter ERDL) 12 and 13 on either side of the PIC 1 and the EIC 2, a copper pillar connection 14 connecting the two ERDLs, and an array of solder balls 15 attached to contact pads 16 in the first ERDL 12. The second ERDL 13 comprises electrical conductors 17. Both the conductors 17 and the pads 16 are embedded in a dielectric material 18. The conductors 17 are not shown in the top section view of Figure 1b, in order not to complicate this top view drawing.

The package is produced by the known technique generally referred to as Fan-out Wafer level packaging (FO-WLP) or embedded Wafer level ball grid array (eWLB). According to this technology, components are embedded in an encapsulation material, using moulding techniques applied on wafer scale. In the side view of the package shown in Figure 1a, the encapsulation material is indicated by reference numeral 20 (all areas provided with crosswise hatching).

In the embodiment shown, the ORDL 10 is a polymer layer comprising lower and upper cladding layers 10a and 10b and a core layer 10c sandwiched between the cladding layers. The core layer 10c comprises patterned polymer waveguides 21 overlying tapered silicon waveguides (not shown) in the area of overlap between the ORDL 10 and the PIC 1, to thereby couple light signals from the Si to the polymer and vice versa through adiabatic coupling. This coupling mechanism is known as such and therefore not described here in detail. As also known in the art, the core material and cladding material are different types of polymer with different refractive indexes, so that light is captured within the core waveguides. The cladding material is not only present in the top and bottom layer 10a and 10b, but also between the individual core waveguides 21, in the core layer 10c.

As seen in the top view, the polymer waveguides 21 fan out from the smaller pitch between the Si waveguides, to a larger pitch at the end face 19 of the ORDL 10, corresponding to the end face of the core layer 10c. This larger pitch is adapted to the pitch of standard fibre arrays, for example fibre arrays of pitch 127 µm or 250µm. Only a small number of Si and polymer waveguides are shown in the drawing. In reality, the number of waveguides may be much higher. Also, the scale applied in the drawing is not realistic as there is normally a much larger difference between the pitch of the Si waveguides and the pitch of the end sections of the polymer waveguides 21. The drawing is only meant to give a conceptual idea of the design of the polymer waveguides in the ORDL 10.

On top of the ORDL 10 is the adapter die 11, which may be formed of a suitable material, for example glass, polymer or silicon. In the embodiment shown in the drawings, the adapter die 11 comprises two holes 22 oriented perpendicularly to the plane of the package. These holes 22 serve as mechanical attachment points for a connector (not shown) comprising an array of fibres with the same pitch as the pitch of the end sections of the polymer waveguides 21 (in the end face 19). The connector is provided with pins which can be plugged into the holes 22 so that when the connector is thus secured to the package, the fibres are facing the respective polymer waveguides 21 along the end face 19 of the ORDL 10, so that the Si waveguides may be coupled to these fibres, via the ORDL 10. The combined presence of the ORDL 10 and the adapter die 11 in a moulded package produced by fan-out wafer level packaging thus provides a way to couple fibres to the PIC 1 without requiring complex coupling methods in the packaging process itself.

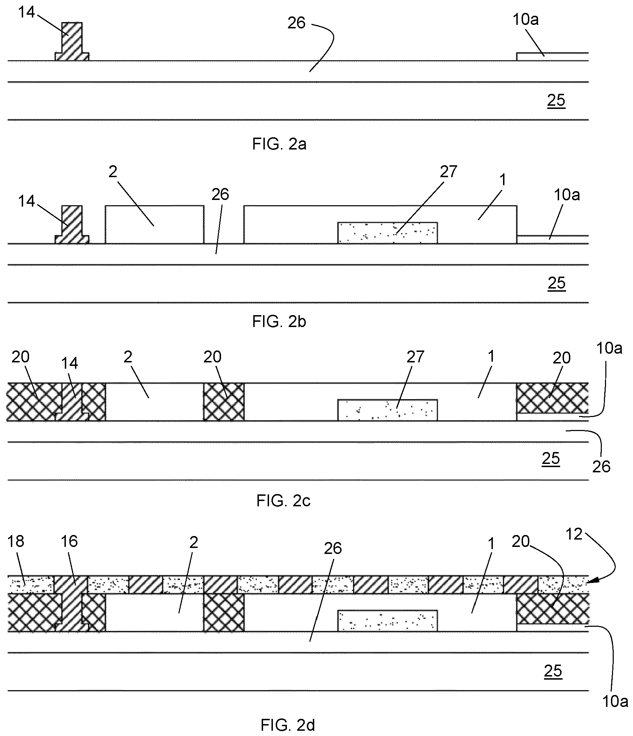

Figures 2a to 2k illustrate an embodiment of the method of the invention, for producing the package of Figure 1. Figure 2a shows a first carrier wafer 25 with a layer of a temporary bonding material 26 on its surface. The carrier wafer 25 and the layer 26 may be any type of wafer and material suitable as a base for performing the FO-WLP technique. The image shows only a small portion of the wafer, which may extend over a large surface, for example having a diameter of 300mm. As shown in Figure 2a, the copper pillar 14 and the first cladding layer 10a of the ORDL are produced directly on the layer 26. The cladding layer 10a may be produced by spinning a full layer of polymer on the surface and patterning said layer by lithography and etching. The copper pillar 14 may be produced by electroplating a Cu seed layer, with photoresist defining the diameter of the pillar. Then (Figure 2b), the PIC 1 and the EIC 2 are attached face down to the temporary bonding layer 26, by a suitable die bonding technique known in the art. The PIC 1 comprises a portion 27 of a temporary material, for example a polymer that is removable relative to the PIC by wet etching. The temporary material covers the location configured to receive the laser diode chip later in the process. The PIC 1 is placed directly adjacent the cladding layer 10a. Then a first overmoulding step is done, see Figure 2c. This may be done by a compression molding technique known from the domain of fan-out wafer level packaging. The encapsulation material may be a thermosetting polymer material mixed with a large volume fraction of inorganic materials (typically small silica particles) to control the encapsulation material's mechanical properties. Preferably an epoxy mould compound (EMC) is used. After setting of the encapsulation material, the material extending above the PIC 1 and the EIC 2 is removed by a suitable thinning technique, preferably by grinding, until the pillar 14, the PIC 1 and the EIC 2 are exposed in the upper surface of the planarized wafer, as illustrated in Figure 2c. This produces a first reconstructed wafer formed of the encapsulation material with the PIC 1 and EIC 2 and other components outside of the view of the drawings, embedded therein.

Then the first ERDL 12 is produced (see Fig. 2d) by a technique known as such, for example involving single or dual damascene techniques. The ERDL 12 may be more complex than represented in the drawings which show only contact pads 16 for the solder balls. The ERDL 12 may comprise multiple levels of interconnects and contact vias, for connecting the solder balls to the PIC 1 and EIC 2. All this is well-known in the art and therefore not further described here in detail.

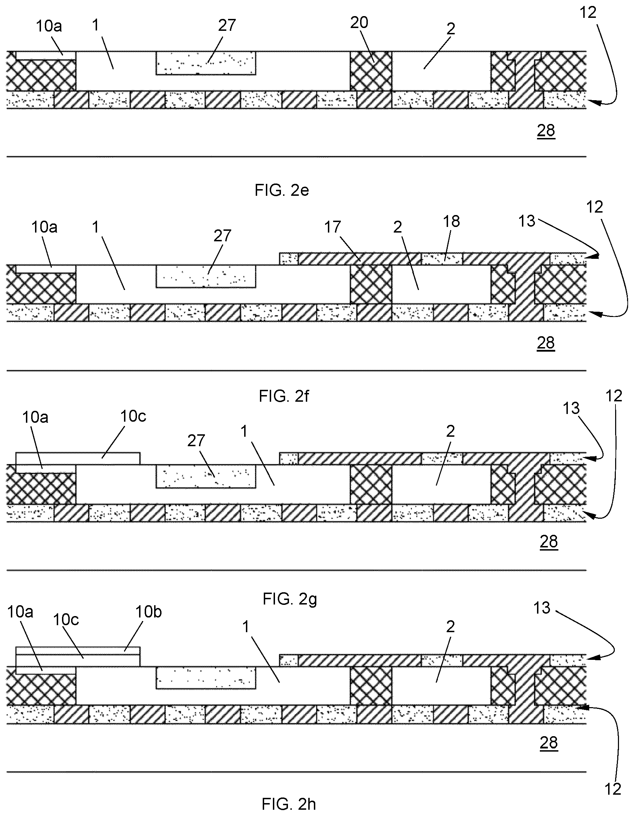

The reconstructed wafer is then released from the temporary bonding layer 26, flipped and bonded to a second carrier wafer 28, see Figure 2e. Then the second ERDL 13 is formed on the opposite side of the PIC and the EIC (Fig. 2f).

Following this, the dielectric 18 of the ERDL 13 is opened by lithography and the core layer 10c of the ORDL 10 is produced, see Figure 2g. According to the method of the invention, this step utilizes adaptive lithographic patterning, for example the known process of Direct Write Lithography (DWL). This process uses image recognition for detecting the Si waveguide pattern on the PIC 1. Then the polymer waveguides 21 are produced accurately on top of the Si waveguides, at their detected positions. The production of polymer waveguides in this manner has been described in the publication Adaptive Patterning of Optical and Electrical Fan-out for photonic chip packaging, Elmogi et al, proceedings of 2019 IEEE 69th Electronic Components and Technology Conference (ECTC), p. 1757-1763. A layer of the core polymer having properties of a photoresist is first spun on the wafer, after which the polymer waveguides 21 (see Fig. 1b) are formed by DWL, by illuminating the areas of the waveguides with a laser, thereby hardening the polymer in these areas, after which the non-illuminated core polymer is removed. The polymer waveguides 21 are created accurately on top of the Si waveguides because the DWL process is based on the image of these Si waveguides. The fanned-out parts of the polymer waveguides 21 are formed according to a pre-defined fanning-out pattern. Another adaptive lithographic patterning technique suitable for producing the polymer waveguides in the core layer 10c is two-photon lithography, which allows to define 3D structures within the core layer 10c of the ORDL, for example increasing the diameter of the polymer waveguides from a smaller diameter at the location of the coupling to the silicon waveguides to a larger diameter at the end face of the ORDL, to allow for expanded beam coupling to expanded core fibres. Two-photon lithography is known as such, and described for example in 'Two-photon lithography for microelectronic application", En-Shinn Wu et al, Proc. SPIE 1674, Optical/Laser Microlithography V, 1 June 1992.

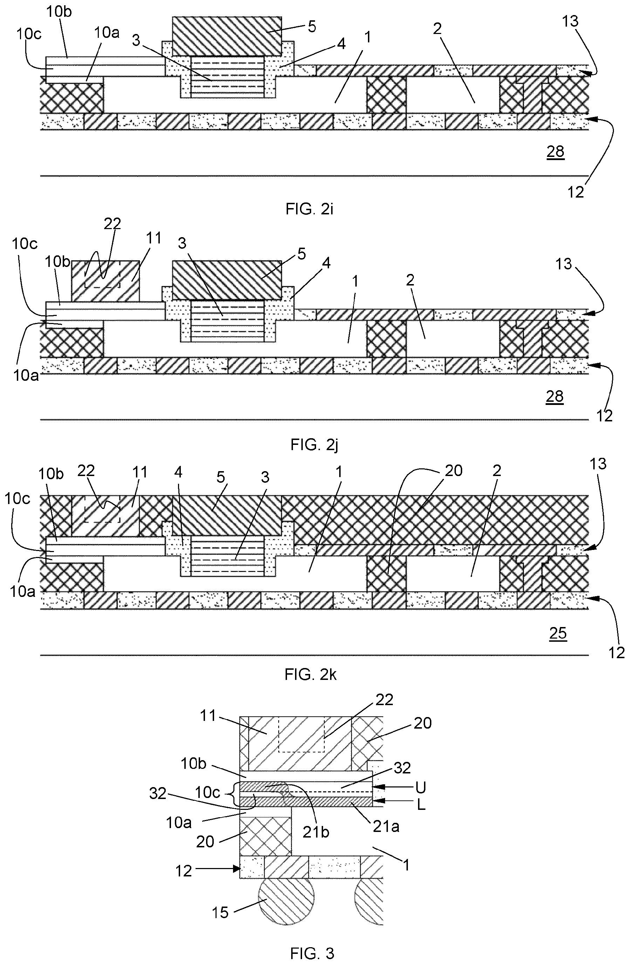

One particular embodiment obtainable by applying two-photon lithography is illustrated in Figure 3. A detail is represented of the layers 10a, 10b and 10c of the ORDL 10. Numerical references in Figure 3 which already appear in Figure 1 indicate the same features as cited with reference to Figure 1. In the embodiment of Figure 3, the core layer 10c comprises a first set of polymer waveguides 21a adiabatically coupled to Si waveguides in the PIC 1, and extending towards the end plane of the ORDL 10 in a lower level L of the core layer 10c, preferably according to a fan-out pattern. A second set of polymer waveguides 21b adiabatically coupled to Si waveguides in the PIC are locally shaped along an S-curve so as to evolve from the lower plane L to an upper plane U. Beyond the S-curve, these polymer waveguides 21b further extend towards the end plane of the ORDL, in said upper plane U, and also preferably according to a fan-out pattern. The S-curve represents a 3D shape that can be realised by two-photon lithography. This embodiment allows coupling the package to a connector provided with two arrays of fibres at two parallel levels. Two-photon lithography can generally be used to produce a core layer 10c wherein the polymer waveguides are shaped so as to allow their coupling to a connector comprising multiple fibres which are not arranged in a one-dimensional array. Another example is a connector for connecting a cable having a circular cross-section which bundles multiple circular-section fibres. Two-photon lithography allows to shape the polymer waveguides in the core layer 10c so that the waveguides are arranged in the end face of the ORDL along the required arrangement of the fibres in the bundle.

The formation of the core layer 10c (either according to the embodiment of Figure 1 or of Figure 3) is followed by spinning a cladding polymer that fills the areas in between the core polymer waveguides 21, or in the case of Figure 3, the areas 32 between the lower and upper waveguides 21a and 21b, and forms the top cladding layer 10b, as shown in Figure 2h. Suitable materials for the core and cladding layers are for example EpoCore and EpoClad, available from Microresist Technology GmbH. Then the cladding layer 10b is patterned to remove said layers outside the area of the ORDL 10, resulting in the ORDL 10 as shown in Figure 2h and Figure 1b.

After this (see Fig. 2i), the temporary material 27 of the PIC 1 is removed and the laser diode chip 3 is placed on the PIC 1, followed by the formation of the glob top epoxy 4 and the heat sink 5. As stated, these features are known as such in the context of PICs and not essential for the invention. They may be produced according to known methods. The heat sink may be formed for example of Si or AIN.

Then the adapter die 11 is positioned onto the ORDL 10, as illustrated in Figure 2j, and attached thereto by an adhesive layer (not shown). In the embodiment illustrated in the drawings, the adapter die 11 is a previously formed plate-shaped element formed of a hard synthetic material that is compatible with the polymer of the ORDL 10 and with the encapsulation material. The adapter die 11 may itself be formed of a polymer or it could be formed of glass or silicon. It is positioned by a placement technique that allows a high accuracy with respect to the position of the polymer waveguides 21 of the ORDL 10, for example by a die bonding tool known for the assembly of chips onto a wafer. The core layer 10c of the ORDL may be provided with non-functional core structures which serve as orientation points for the accurate positioning of the adapter die 11. In this case, these core structures are not covered by the material of the top cladding layer 10b. Alternatively, alignment markers could be defined in the metal pads 17 of the ERDL 13, to which both the core 10c of the ORDL and the adapter die 11 are aligned, during lithography (core 10c) or during die bonding (adapter die 11).

If the adapter die 11 itself has suitable refractive properties similar to those of the cladding polymer, for example if the adapter die is produced from polymer or glass having such properties, the second cladding layer 10b on top of the core layer 10c could be omitted and the adapter die 11 could be placed directly on the core layer 10c. This would however still require the step of depositing cladding polymer in between the polymer waveguides 21. The second cladding layer 10b is therefore optional, if the adapter die 11 can itself perform this function.

The openings 22 (see Fig. 1b) are temporarily filled with a removable material. Then a second overmoulding step is performed (see Fig. 2k). The encapsulation material 20 is planarized until the upper surfaces of the adapter die 11 and the heat sink 5 are exposed. Then the temporary material inside the openings 22 is removed. The final reconstructed wafer is subsequently released from the second carrier 28 and the solder balls 15 are attached. The wafer is then diced to form separate packages, resulting in the package shown in Figures 1a and 1b. Dicing takes place through the layers 10a, 10c and 10b of the ORDL, to thereby create the end face of the ORDL at the edge of the package. The dicing may be based on using a mechanical dicing blade, or might be a combination of different techniques, including laser ablation and mechanical dicing. The advantage of using laser ablation is that it allows to create an end-facet to the ORDL with low surface roughness, required to have a good optical coupling to the optical fibers.

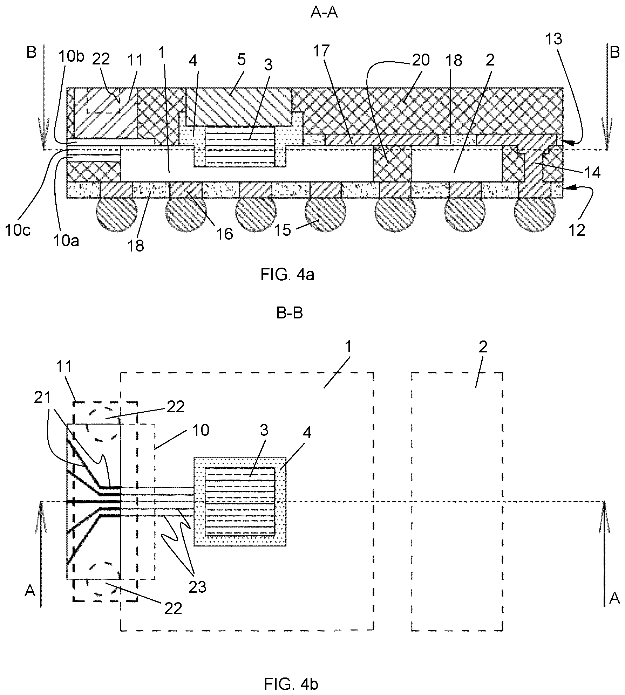

A second embodiment is illustrated in Figures 4a and 4b. The numerical references replicated from Figure 1 indicate the same components as in the first embodiment. According to this second embodiment, the polymer waveguides 21 are coupled to the Si waveguides 23, now visible in the top section view in Figure 4b, by so-called butt coupling, i.e. by positioning an end face of each polymer waveguide 21 in line with an end face of a Si waveguide 23 (see Figure 4b). This embodiment requires the presence of a spot size converter (not shown) on the PIC 1 that matches the mode field diameter of the polymer waveguides 21. As shown in the drawing, the core layer 10c of the ORDL 10 is now located next to the PIC 1, with one cladding layer 10a underneath the core layer 10c, and the second cladding layer 10b extending above the core layer 10c and extending onto the PIC's upper surface. This upper cladding layer 10b could extend across the full wafer and replace the dielectric 17 of the ERDL 12.

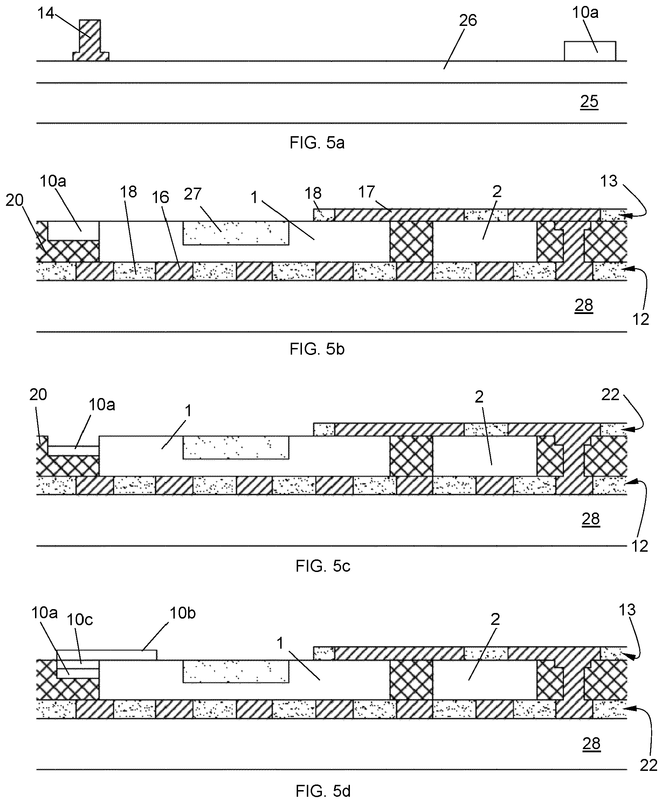

To manufacture the package of Figures 4a and 4b, an additional process step is required, as illustrated in Figures 5a to 5d. As seen in Figure 5a, the cladding polymer layer 10a produced on the temporary adhesive 26 is thicker than in the first embodiment. After this, the steps are the same, including processing the first ERDL 12 and up to the release from the first carrier 25, the bonding to the second carrier 28, and the processing of the second ERDL 13, illustrated in Figure 5b. Now a dry etch is performed, recessing the cladding polymer layer 10a, as illustrated in Figure 5c. Then the core layer 10c and the second cladding layer 10b are produced, see Figure 5d. After this, the steps are the same as in the first embodiment. The second cladding layer 10b is again optional if the adapter die itself has the required refractive properties to fulfill the function of this second cladding layer.

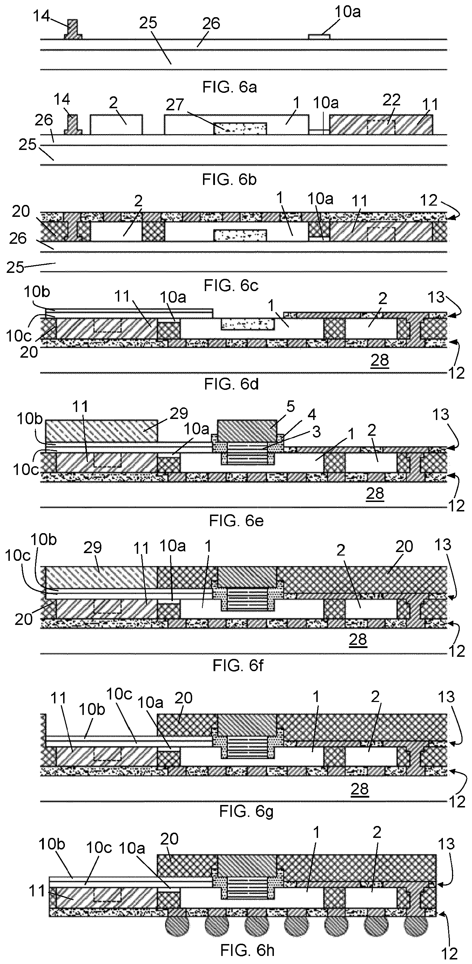

According to a third embodiment illustrated in Figure 6, the adapter die 11 is placed before producing the ORDL 10. This has the advantage that the accuracy with which the adapter die 11 is placed is not subject to the same standard of precision as in the previous two embodiments. As seen in Figures 6a and 6b, the adapter die 11 is placed together with the PIC 1 and the EIC 2 on the temporary adhesive 26, adjacent to the first cladding layer 10a. The adapter die 11 is then embedded in encapsulation material 20 in the first molding step, which is followed by the processing of the first ERDL 12 (see Figure 6c). After releasing the reconstructed wafer from the first carrier 25 and bonding it to the second carrier 28 and after processing the second ERDL 13, the core polymer layer 10c and the second cladding layer 10b are produced (see Figure 6d), resulting in the ORDL 10 placed above the adapter die 11. The core layer 10c is again produced by adaptive lithographic patterning, based on the image of the Si waveguides of the PIC 1. The adapter die 11 may be provided with markings (fiducials), placed accurately with respect to the openings 22 or the openings 22 themselves could be used as markings, allowing the adaptive patterning technique to be based on an image of these markings for producing the fan-out pattern in the core layer 10c, in an accurate position relative to the markings (fiducials and/or the openings 22). This approach thereby reduces the required accuracy by which the adapter die itself is positioned with respect to the PIC 1.

The core layer 10c is placed directly on the upper surface of the adapter die 11 in the embodiment shown in Figure 6d. This requires that the refractive properties of the adapter die 11 are similar to those of the cladding layers 10a and 10b, so that the material of the adapter die fulfills the function of cladding material with respect to the polymer waveguides in the core layer 10c. If the material of the adapter die does not have these required refractive properties, an additional cladding layer is deposited on the adapter die before producing the core layer 10c. For example in the case of a silicon adapter die, which does not have the correct refractive properties, a layer of silicon oxide may be used as additional cladding layer. As seen in Figure 6e, the laser diode chip 3, glob top epoxy 4 and heat sink 5 are produced as in the previous embodiments, before the second overmoulding step. However in this embodiment, a block 29 of temporary material is produced above the adapter die 11 and the ORDL 10, also before the second molding step, so that the block 29 is embedded in the encapsulation material 20 together with the laser diode chip 3 and the heat sink 5, see Figure 6f. After planarization, the upper surface of the block 29 of temporary material is exposed. The block is subsequently removed (Fig. 6g), for example by wet etching. This technique of embedding temporary materials in the mold substrate and subsequently removing them is known per se, for example from patent publication US2017/0287736. Suitable materials and methods known from prior art such as the named document are applicable in this embodiment of the present invention. After dicing, the final package is obtained, as illustrated in Figure 6h.When the adapter die 11 is produced before the ORDL 10 as in the case shown in Figure 6, it is also possible to couple the polymer waveguides to the silicon waveguides by butt coupling. As in the previous embodiment, the first cladding layer 10a needs to be recessed before producing the core layer. In this case however, the recessing is also applied to the adapter die 11, so that the upper surface of the adapter die remains at the same level as the upper surface of the recessed cladding layer 10a.

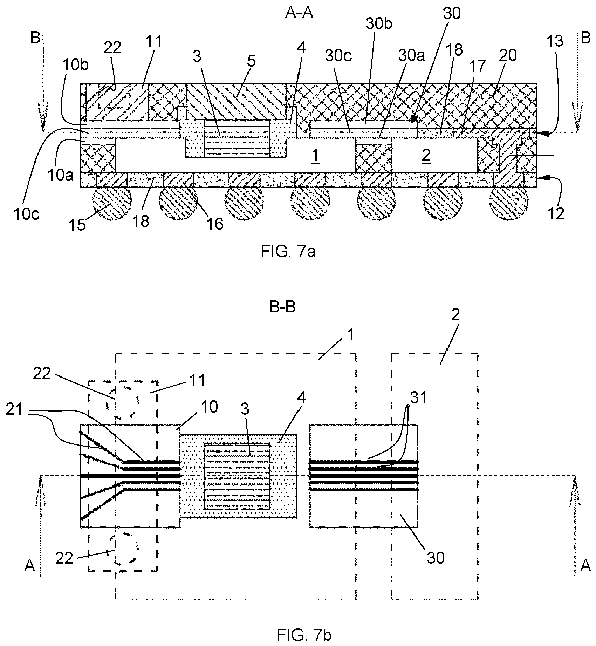

A package according to the invention may comprise multiple PICs, and an additional ORDL that interconnects two or more PICs. This embodiment is illustrated in Figures 7a and 7b, which show a package according to the invention comprising two photonic IC chips 1 and 1'. The first PIC 1 is coupled to the end face of the package by the same ORDL 10 and adapter die 11 described in relation to the first embodiment A second ORDL 30 connects the first PIC 1 to the second PIC 1'. Like the first ORDL 10, the second ORDL 30 comprises a first cladding layer 30a, a core layer 30c and a second cladding layer 30b. These layers can be produced simultaneously with the respective corresponding layers 10a, 10c and 10b of the ORDL 10. As seen in the top section view, the polymer waveguides 31 of the second ORDL 30 are coupled by adiabatic coupling to underlying Si waveguides (not visible) on the PICs 1 and 1'. By performing the same recess steps described above, the coupling may be realized by butt coupling instead of adiabatic coupling.

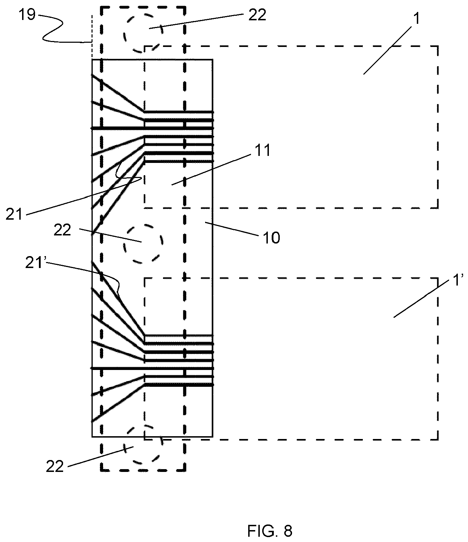

Figure 8 shows an embodiment (only in top view), wherein two PICs 1 and 1' are provided with a single ORDL 10 and a single adapter die 11, for connection of the PICs to a single connector, to be attached to the adapter die 11 via the holes 22 (three holes in this case). The ORDL 10 comprises two sets of polymer waveguides 21 and 21' arranged in fan-out patterns towards the end face of the ORDL 10. The polymer waveguides 21 and 21' fan out towards a single array of regularly spaced coupling locations on the end face 19 of the ORDL 10.

The invention is not limited to the embodiments described above. The adapter die 11 may be a plate-shaped element as is the case in the embodiments shown in the drawings, but other shapes are possible, as long as the adapter die fulfills its function in accordance with the invention, which is to form an alignment aid for the coupling of optical fibres mounted in a connector, to the polymer waveguides 21 along an end face of the core layer of the ORDL 10. The shape of the adapter die 11 is therefore linked to the shape of the connector used in conjunction with the package according to the invention.

The end face of the core layer 10c and of the polymer waveguides within said core layer, i.e. the face opposite to which the fibres of the connector are to be positioned, is not necessarily perpendicular to the plane of the package, as is the case in the embodiments represented in the drawings. The end face could be at an angle to said plane, for example by removing a portion of the polymer waveguides at an angle of for example 45° with respect to the plane of the package (being the plane of the reconstructed wafer from which the package is produced). Another alternative would be to incorporate a mirror face at 45° in the core layer 10c, to thereby deviate the light signals to the vertical direction. This is useful for coupling the package to a connector wherein the fibres are oriented vertically with respect to the plane of the package. The mirror face could be produced by incorporating a pre-formed mirror element in the core layer 10c. The mirror face then represents the 'end face' of the ORDL 10.

The way in which the connector is mechanically fixed to the adapter die is not limited to the connection via the openings 22 shown in the drawings. The adapter die could be provided with other mechanical attachment aids such as grooves, studs, pedestals or pins which cooperate with corresponding features on the connector. For example one or more studs on the adapter die may be combined with one or more corresponding grooves in the connector, or one or more grooves in the adapter die may be combined with one or more pins in the connector.

The invention is thus also related to a kit of parts, comprising one or more semiconductor chip packages according to the invention, and one or more connectors adapted to fit onto the adapter dies incorporated in said packages.

The methods of the invention are not limited by the totality of the method steps described above. For example, the disposition and processing of the electrical redistribution layers 12 and 13 may be different than described. A package of the invention does not necessarily include EICs together with PICs. The package may comprise only photonic chips or only one photonic chip and no EICs. Other techniques may be used for electrically interconnecting PICs and EICs in a package according to the invention, for example flip-chip bonding of the EIC on top of the PIC.

The pattern of the polymer waveguides 21 is not limited to a fan-out pattern. In addition to or instead of the fan-out pattern, the polymer waveguides may be processed according to any pattern that interconnects one or more semiconductor waveguides to one or more fibres, for example for including optical MUX/DEMUX functions in the ORDL. The invention is thus also not limited to the coupling of an array of semiconductor waveguides to an array of fibres. In theory, a connector holding one single fibre could be coupled to a single silicon waveguide in a package according to the invention

The second moulding step may not be required. For example if the PIC in the embodiment of Figure 1 is a chip that does not require mounting a laser diode, the reconstructed wafer may be diced after attaching the adapter die 11 to its surface, i.e. without encapsulating the adapter die in the encapsulation material.

The invention is not limited to the use of silicon PICs. Also silicon nitride or other photonic integrated circuit technology (InP, GaAs, etc) could be used. PICs of different technologies (Si, InP) could be combined in one package.

The coupling between the silicon waveguides 23 and the polymer waveguides 21 is not limited to adiabatic coupling or butt coupling but may use any coupling method known in the art. For example the PIC could be provided with grating couplers, known as such in the art. One grating coupler is then incorporated in the PIC for each Si waveguide. In this case, the core layer 10c of the ORDL is provided with micro-optical structures, for example mirror elements, for providing out-of-plane coupling from the grating couplers to the polymer waveguides 21 in the core layer 10c.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

Unless specifically specified, the description of a layer being present, deposited or produced 'on' another layer or substrate, includes the options of
- said layer being present, produced or deposited directly on, i.e. in physical contact with, said other layer or substrate, and
- said layer being present, produced or deposited on one or a stack of intermediate layers between said layer and said other layer or substrate.

## Claims

1. A semiconductor chip package, comprising the following components embedded in an encapsulation material (20) :
- At least one photonic integrated circuit chip (1), comprising a plurality of semiconductor waveguides (23),
- An optical redistribution layer (10) comprising a plurality of polymer waveguides (21) which are optically coupled to the semiconductor waveguides (23), wherein the polymer waveguides are part of a polymer core layer (10c)the polymer waveguides extending between the semiconductor waveguides (23) and an end face of the core layer (10c),
- An adapter die (11) comprising one or more attachment and/or alignment features (22) configured to interact with corresponding features on a connector comprising one or more optical fibres, said interaction being required for attaching the connector to the package, so that when the connector is attached to the package, the one or more fibres are facing one or more polymer waveguides (20) at the end face of the core layer (10c).

2. The package according to claim 1, wherein the core layer (10c) is sandwiched between a first and second polymer cladding layer (10a,10b).

3. The package according to claim 1, wherein the polymer waveguides (21) are coupled to the semiconductor waveguides (23) by adiabatic coupling.

4. The package according to claim 1, wherein the polymer waveguides (21) are coupled to the semiconductor waveguides (23) by butt coupling.

5. The package according to any one of the preceding claims, wherein the adapter die comprises openings (22) configured to receive pins or equivalent connection means of the connector.

6. The package according to any one of the preceding claims, wherein the package further comprises at least one electronic integrated circuit chip (2) embedded in the encapsulation material.

7. The package according to any one of the preceding claims, comprising multiple PICs (1,1') and wherein the ORDL comprises a portion (30) that interconnects two or more PICs.

8. The package according to any one of the preceding claims, comprising multiple PICs (1,1') and wherein the ORDL (10) and the adapter die (11) are configured to connect one or more connectors to at least two PICs simultaneously.

9. The package according to any one of the preceding claims, wherein at least some of the polymer waveguides (21b) in the optical redistribution layer (10) are shaped according to a 3-dimensional shape so as to allow the coupling of all the polymer waveguides (21a,21b) to a connector comprising multiple fibres which are not arranged in a one-dimensional array.

10. A kit of parts comprising at least one package according to any one of the preceding claims and at least one connector configured for attachment to the adapter die (11) of said at least one package.

11. A method for producing a package according to any one of claims 1 to 9, the method comprising the steps of :
- Producing by a first overmoulding and planarization step a planarized reconstructed wafer, the reconstructed wafer comprising, embedded in an encapsulation material (20), at least the following components :
∘ the photonic integrated circuit chip (1), an upper surface of the chip being coplanar with a planarized surface of the wafer, said upper surface comprising a plurality of semiconductor waveguides (23),
∘ the first polymer cladding layer (10a) directly adjacent the chip (1),
- Producing the polymer waveguides (21) on top of and in physical contact with the first cladding layer (10a), wherein the polymer waveguides are optically coupled to the semiconductor waveguides (23), and wherein the polymer waveguides are produced by adaptive lithographic patterning based on an image of the position of the semiconductor waveguides (23),
- Filling spaces between the polymer waveguides (21) with polymer cladding material, thereby forming the polymer core layer (10c),
- producing a second cladding layer (10b) on top of the polymer core layer, said second cladding layer being optional if the adapter die itself has the refractive properties of a cladding layer,
- Placing the adapter die (11) on top of the second polymer cladding layer (10b), or on the core layer if no second cladding layer is produced and if the adapter die itself has the refractive properties of a cladding layer,
- Optionally performing a second overmoulding and planarization step, thereby embedding the adapter die (11) in the encapsulation material (20) and forming a final reconstructed wafer,
- Separating the reconstructed wafer or the final reconstructed wafer into separate packages.

12. A method for producing a package according to any one of claims 1 to 9, the method comprising the steps of :
- Producing by a first overmoulding and planarization step a planarized reconstructed wafer, the reconstructed wafer comprising, embedded in an encapsulation material (20), at least the following components :
∘ the photonic integrated circuit chip (1), an upper surface of the chip being coplanar with a planarized surface of the wafer, said upper surface comprising a plurality of semiconductor waveguides (23),
∘ the first polymer cladding layer (10a) directly adjacent the chip (1),
∘ the adapter die (11) directly adjacent to the first polymer cladding layer (10a), an upper surface of the adapter die being coplanar with the planarized surface of the first reconstructed wafer,
- producing an additional cladding layer on the first cladding layer and on the adapter die, wherein the additional cladding layer is optional if the adapter die itself has the refractive properties of a cladding layer,
- Producing the polymer waveguides (21) on top of and in physical contact with the additional cladding layer or with the first cladding layer (10a) and the adapter die (11), wherein the polymer waveguides are optically coupled to the semiconductor waveguides (23), and wherein the polymer waveguides are produced by adaptive lithographic patterning based on an image of the position of the semiconductor waveguides (23) and on an image of one or more position markers present on the adapter die (11),
- Filling spaces between the polymer waveguides (21) with polymer cladding material, thereby forming the polymer core layer (10c) and forming the second cladding layer (10b) on top of the polymer core layer,
- Optionally performing a second overmoulding and planarization step, thereby forming a final reconstructed wafer,
- Separating the reconstructed wafer or the final reconstructed wafer into separate packages.

13. The method according to claim 11 or 12, wherein the first cladding layer (10a) is coplanar with the upper surface of the chip (1), and wherein the polymer waveguides (21) are produced on top of the semiconductor waveguides (23) so as to be coupled thereto by adiabatic coupling.

14. The method according to claim 11, wherein the first cladding layer (10a) is recessed with respect to the upper surface of the chip (1), and wherein the polymer waveguides (21) are produced colinearly with respect to the semiconductor waveguides (23) so as to be coupled thereto by butt coupling.

15. The method according to claim 12, wherein the first cladding layer (10a) and the adapter die (11) are recessed with respect to the upper surface of the chip (1), and wherein the polymer waveguides (21) are produced colinearly with respect to the semiconductor waveguides (23) so as to be coupled thereto by butt coupling.
